# EUROPÄISCHE PATENTSCHRIFT

(11) **EP 1 100 611 B1**
(45) Veröffentlichungstag und Bekanntmachung des Hinweises auf die Patenterteilung: **27.11.2002**
(21) Anmeldenummer: 99928992.9
(22) Anmeldetag: 19.07.1999
(51) Int. Cl.: B01D 53/86

(54) **VERFAHREN ZUR REINIGUNG EINES GASSTROMS**
METHOD FOR PURIFYING A GAS STREAM
PROCEDE DE PURIFICATION D'UN COURANT GAZEUX

(30) Priorität: 04.08.1998 DE 19835186
(43) Veröffentlichungstag der Anmeldung: 23.05.2001
(73) Patentinhaber: BÜHLER AG, 9240 Uzwil (CH)
(72) Erfinder: FERREIRA, Claudemiro, CH-9524 Zuzwil (CH); NAEF, Urs, Georg, CH-8413 Neftenbach (CH); BORER, Camille, CH-8247 Flurlingen (CH)
(74) Vertreter: Frommhold, Joachim, Dr.
(86) Internationale Anmeldenummer: CH9900332
(87) Internationale Veröffentlichungsnummer: WO00007698

(56) Entgegenhaltungen:
- EP-A- 0 699 471
- DE-A- 19 506 012
- US-A- 4 950 476
- US-A- 5 893 039

## Beschreibung

Die vorliegende Erfindung bezieht sich auf ein Verfahren nach dem Oberbegriff des Anspruches 1 sowie auf eine Anlage nach dem Oberbegriff des Anspruches 11.

Verfahren und Anlagen dieser Art sind aus den US-A-5,547,652 oder 5,612,011 bekannt geworden. Es geht dabei um die Reinigung der Abgase des Prozesses mittels eines Katalysators (im Gegensatz zur Reinigung durch Gaswäsche), oder, anders ausgedrückt, um die Nachverbrennung (Oxydation) der Verunreinigungen. Es versteht sich, dass daher das Verhältnis der Sauerstoffmenge zu den Verunreinigungen von höchster Bedeutung ist. Dabei waren bisher zwei Überlegungen massgebend: Einerseits ging man davon aus, dass zur vollständigen Oxydation der Verunreinigungen eine mindestens stöchiometrische Menge an Sauerstoff nötig sei. Anderseits dachte man, dass angesichts dieser Forderung die Überwachung der Sauerstoffmenge das beste Mittel sei, um den Reinigungsprozess unter Kontrolle zu halten.

Im Verlaufe der Zeit stellte sich dann heraus, dass trotz Zufuhr einer stöchiometrischen Menge an Sauerstoff die Oxydation nicht vollständig erfolgte, so dass das erstgenannte Patent immerhin noch 10 ppm an unverbranntem Sauerstoff zulässt. Auch dies erwies sich hinsichtlich des Reinigungseffektes als nicht optimal, weshalb man den Überschuss der Sauerstoffmenge noch steigerte. Im Ergebnis musste dann im zweitgenannten Patent eine noch höhere Menge an unverbranntem Sauerstoff von 250 ppm in Kauf nehmen, dachte aber, damit ein optimales Ergebnis geliefert zu haben.

Die beiden genannten Patente beziehen sich auf die Reinigung von Prozessgasen bei der Herstellung von aromatischen Polyestern. Selbstverständlich ist die Gasreinigung besonders bei aromatischen Verbindungen von Interesse, und besonders bei Polyestern, doch liegt es auf der Hand, dass solche Reinigungsverfahren auch bei anderen Gasen und Verunreinigungen anzuwenden sind, beispielsweise auch bei Polyamiden, wie aromatischem PA, oder auch bei der Reinigung von Abgasen bei der Bearbeitung natürlicher Stoffe, wie bei der Kaffee- oder Kakaoröstung.

In "Das Techniker Handbuch", von Alfred Böge, Vieweg-Verlag, Seiten 1158 und 1159, wird ein spezieller ZrO₂/Pt-Sauerstoffsensor beschrieben, wie er typischerweise in der Kfz-Technik verwendet wird.

Die EP 0 699 471 A1 beschreibt ein Verfahren zur Reinigung der im wesentlichen sauerstofffreien Prozessgase aus der thermischen Festphasenbehandlung von Kondensationspolymeren, wobei zur katalytischen Oxidation der oxidierbaren organischen Verunreinigungen eine höchstens stöchiometrische, d.h. ggf. hypostochiometrische Menge Sauerstoff hinzugegeben wird. Es wird hier der Kohlenmonoxidgehalt, der zum Sauerstoffgehalt in Beziehung steht, am Ausgang des Oxidationsreaktors z.B. mittels einer Mikro-Brennstoffzelle bestimmt, wodurch sich indirekt der Sauerstoffgehalt bestimmen lässt. Allerdings hat dies den Nachteil, dass man relativ hohe Kohlenmonoxidgehalte in Kauf nehmen muss.

Die vorliegende Erfindung geht nun den umgekehrten Weg. Dieser besteht grundsätzlich darin, dass statt die Sauerstoffmenge in den Vordergrund zu stellen, die Menge der Restverunreinigungen zum Mass genommen wird bzw. das Verhältnis der Sauerstoffmenge zu den Restverunreinigungen. Dieser erste Schritt der Erfindung führte in der Folge zu erstaunlichen Erkenntnissen. Zum einen zeigten Versuche der Anmelderin, dass - gerade im Gegensatz zu den bisherigen Überlegungen der Fachleute - die stöchiometrische oder hyper-stöchiometrische Sauerstoffmenge nicht zur optimalen Reinigung führt, und dass die bisherigen Massnahmen nicht nur eine grosse Menge an Sauerstoff benötigten (falls man nicht einfach Luft einsetzte), sondern dadurch die ganze Anlage eher überdimensioniert und verteuert wurde. Zum anderen zeigte sich, dass das bisher angewandte Messprinzip auf falschen Voraussetzungen beruhte und damit letztlich ungenaue Ergebnisse lieferte.

Deshalb liegt der vorliegenden Erfindung die Aufgabe zugrunde, die bisherigen Verfahren zur Reinigung eines Gasstromes der im Oberbegriff des Anspruches 1 genannten Art hinsichtlich ihrer Wirksamkeit zu verbessern. Dies gelingt durch die kennzeichnenden Merkmale des Anspruches 1.

Die hypo-stöchiometrische Sauerstoffmenge beträgt bevorzugt 98% bis < 100%, vorzugsweise wenigstens 99%, der stöchiometrischen.

An sich ist es überaus überraschend, dass gerade eine hypo-stöchiometrische Menge an Sauerstoff zum besseren Ergebnis führt, und die theoretische Erklärung für dieses Phänomen liegt noch nicht vor. Versuche haben aber diese Tatsache bestätigt; es werden nämlich kaum mehr messbare Restverunreinigungen bzw. Reste an unverbranntem Sauerstoff festgestellt. Natürlich ist es schwierig, solch geringe Restmengen überhaupt noch zu überwachen. Es hat sich gezeigt, dass - will man tatsächlich die Verbesserung hinsichtlich der Reinigung auf die Spitze treiben - die übliche Sauerstoffsonde nur unvollkommene Ergebnisse liefert. Deshalb ist erfindungsgemäss vorgesehen, eine Lambda-Sonde zu verwenden. Es versteht sich dabei, dass eine solche Lambda-Sonde auch bei der bisher bekannten Vorgangsweise unter Einsatz stöchiometrischer oder hyper-stöchiometrische Sauerstoffmengen eine bessere Überwachung erbringt, dass sie aber besonders dort von Vorteil ist, wo die zu überwachenden Mengen besonders klein sind.

Eine Lambda-Sonde (It. Römpps Chemie Lexikon schreibt man "Λ" als Symbol für die molare Elektrolyt-Leitfähigkeit) stellt zwei Edelmetallschichten, wie Pt, auf einem festen Elektrolyten mit angeschlossenen Elektroden dar. Es fällt auf, dass dieser Aufbau dem des zu überwachenden Katalysators sehr ähnlich ist. Deshalb ist es im Rahmen der Erfindung durchaus möglich, den Katalysator selbst als lambdasondenartige Messzelle heranzuziehen, wobei das Überwachungssignal natürlich entsprechend ausgefiltert, entkoppelt bzw. demoduliert werden muss.

Wie und wo immer aber die Lambda-Sonde zwischengeschaltet wird, es ist ein wesentlicher Zug ihrer Verwendung, dass nun eine direkte Messung der beteiligten Elemente bzw. Elektrolyte an Stelle der bisherigen indirekten Messung möglich ist, wobei noch hinzutritt, dass die Lambda-Sonde eine für eine exakte Messung besonders günstige Charakteristik aufweist. Dass sie bisher nicht verwendet wurde, lag wohl daran, dass man von der stöchiometrischen bzw. hyper-stöchiometrischen Sauerstoffmenge so beeinflusst war, dass man meinte, den unverbrannten Sauerstoff messen zu müssen. Mit der Lambda-Sonde ist man hingegen auch freier hinsichtlich der Prozessführung, denn wenn man das erfindungsgemässe Verfahren für andere Prozesse als die Polykondensation synthetischer Harze einsetzt, ist gegebenenfalls ein Inertgas gar nicht erforderlich, wobei die Messung durch den im Prozess vorhandenen Sauerstoff bei der bisherigen Messmethode noch zusätzlich beeinträchtigt wäre.

In jedem Falle kann man aber, wie an sich bekannt, als verunreinigtes Gas ein Inertgas verwenden, das vorzugsweise nach der Reinigung mindestens zum Teil in den Reaktor rückgeführt wird.

Um die blosse Überwachung, die an sich durch das Bedienungspersonal durchgeführt werden kann, zu einer möglichst rasch ansprechenden Regelung zu machen oder wenigstens eine solche zu ermöglichen, ist es allerdings bevorzugt, wenn die Überwachung mittels wenigstens einer Lambda-Sonde vor dem Katalysator erfolgt und/oder dass die Überwachung mittels wenigstens einer Lambda-Sonde am Katalysator erfolgt. Zwar ist natürlich die Überwachung des Endergebnisses der Reinigung, also nach dem Katalysator, von besonderem Interesse, doch kann eine solche Überwachung bei der Regelung zusätzlich einfliessen.

Eine besonders bevorzugte Anlage zur Durchführung des erfindungsgemässen Verfahrens weist die Merkmale des Anspruches 8 auf.

Weitere Einzelheiten der Erfindung ergeben sich aus der nachfolgenden Beschreibung eines in der Zeichnung schematisch dargestellten Ausführungsbeispieles sowie aus den gegebenen Verfahrensbeispielen. Es zeigen:
- Fig. 1: ein Schema des der Erfindung zugrundeliegenden Prozesses mit einem erfindungsgemässen Ausführungsbeispiel;
- Fig. 2: den Aufbau einer erfindungsgemäss verwendeten Lambda-Sonde;
- Fig. 3: ihre Charakteristik und
- Fig. 4: eine weitere Charakteristik der Lambda-Sonde

Ein Reaktor 1 ist für die Festphasen-Kondensation von Polyesterharzen, wie Polyäthylen-Terephthalat, vorgesehen. Er ist herkömmlich ausgebildet, so dass eine ins einzelne gehende Beschreibung entfallen kann, wobei die Zufuhr und die Abfuhr von Harzmaterial über Zellenradschleusen 2 bzw. 3 erfolgt. Das Abgas des Kondensationsprozesses wird über eine Abgasleitung 4 zunächst einem Filter 5 zum Entfernen partikelförmiger Verunreinigungen zugeführt. Anschliessend wird zweckmässig die Abwärme dieses noch mit gasförmigen Verunreinigungen behafteten Gases in einem Wärmetauscher 6 ausgenützt, der in einer Zuleitung 7 zu einem Katalysator 8 vorgesehen ist.

Eine Luft Einspeisung 9 sorgt für die Zufuhr eines Sauerstoff mindestens enthaltenden Gases, d.h. entweder von reinem Sauerstoff oder einem Gas wie Luft, das eben nur einen entsprechenden Anteil an Sauerstoff enthält. Dieser Sauerstoff wird zur Oxydation der in dem die Zuleitung 7 durchströmenden Gas enthaltenen Verunreinigungen gebraucht und strömt der Zuleitung 7 kurz vor dem Katalysator 8 zu. Die so miteinander vereinigten, in einer Sammelleitung 11 geführten Gasströme werden zweckmässig vor dem Katalysator 8 mit Hilfe eines elektrischen Erhitzers 10 auf eine optimale Temperatur für die im Katalysator 8 stattfindende Oxydation gebracht. Diese liegt zweckmässig im Bereiche von 280°C bis 380°C. Anschliessend tritt die Sammelleitung 11 in den Katalysator 8 ein. Die Katalysatoreinheit 8, 8' weist auch eine Ausgangsleitung 24 auf, die vorteilhaft an den Reaktor, z.B. über einen Erhitzer 23 bzw. zuvor über den Wärmetauscher 6 rückgeführt wird, insbesondere dann, wenn - wie bei der Polykondensation üblich, das zu reinigende Gas ein Inertgas, wie Stickstoff, ist.

Kurz vor dem Eintritt in den Katalysator 8 liegt an der Sammelleitung 11 eine Lambda-Sonde Λ₁, die die vereinigten Gase in ihre Elektrolyten bzw. Elemente zerlegt und quantitativ analysiert. Entsprechend dieser Analyse wird ein entsprechendes, vorzugsweise digitales, Ausgangssignal über eine elektrische Leitung 12 abgegeben. Im dargestellten Ausführungsbeispiel ist aber noch eine weitere elektrische Leitung 13 vorgesehen, die mit dem Katalysator 8 unmittelbar in Verbindung steht.

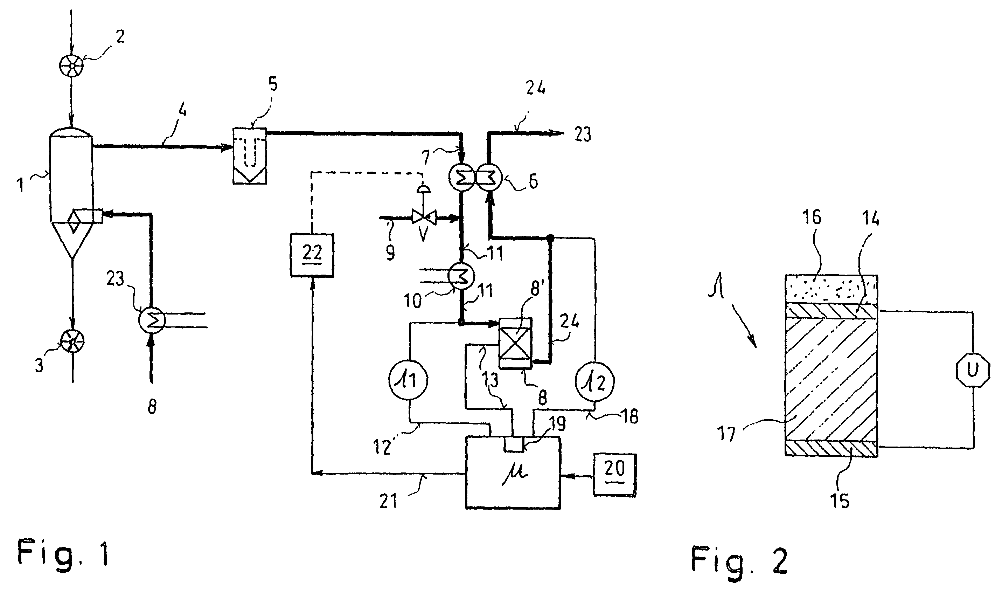

Der Katalysatorkörper 8' ist ähnlich der in Fig. 2 in einem Schnitt gezeigten Lambda-Sonde A aufgebaut, d.h. es ist eine poröse inerte Trägerschicht 16 vorgesehen, an deren Oberfläche eine Edelmetallschicht 14 aufgebracht ist. Die Lambda-Sonde weist auch einen Feststoff-Elektrolyten 17 auf, der mit einer Edelmetallschicht 15 belegt ist. Die Schicht 17 kann beispielsweise aus Zirkonoxyd ZrO₂ bestehen, wogegen die Schichten 14 und 15 meist Pt aufweisen, d.h. entweder zur Gänze aus Platin bestehen oder aus einer Legierung. Während etwa Palladium-Legierungen üblich sind, ist erfindungsgemäss für den Katalysatorkörper 8' vorzugsweise eine Rhodium-Legierung vorgesehen. Dagegen kann die Lambda-Sonde selbst reine Platinschichten 14, 15 aufweisen. Zwischen den Schichten 14 und 15 wird eine Gleichspannung U angelegt, die die gewünschte Elektrolytwirkung hervorruft. Dabei befindet sich das zu untersuchende Gas an der Seite der Schicht 16, wogegen an der Seite der Edelmetallschicht 15 Luft (als Referenz) anliegt.

Auf Grund des ähnlichen Aufbaues der Sonde Λ und des Katalysators 8 ist es denkbar, den Katalysator 8 selbst als lambdasondenartige Messeinrichtung, d.h. zum Bestimmen der Elektrolyten, heranzuziehen, und das dabei gewonnene Ausgangssignal wird an die Leitung 13 (Fig. 1 ) abgegeben.

Es kann alternativ oder kumulativ auch noch eine weitere Lambda-Sonde Λ₂, nämlich am Ausgange der Katalysatoreinheit 8, 8' vorgesehen sein. Diese kann das Ergebnis der Reinigung messen und ein entsprechendes Signal an eine Leitung 18 abgeben. Es versteht sich, dass gegebenenfalls auch nur eine einzige Lambda-Sonde eingesetzt zu werden braucht, wie es umgekehrt auch im Rahmen der Erfindung liegt, auch noch weitere Messstellen mit Lambda-Sonden vorzusehen. Wenn aber auch die Lambda-Sonde Λ₂ das erreichte Ergebnis misst, so ist nicht zu übersehen, dass sie im Verlaufe des Gasstromes erst zu einem relativ späten Zeitpunkt misst, was für eine schnelle Regelung unzweckmässig sein mag. Deshalb kann es günstig sein, in der Leitung 18 ein Differenzierglied vorzusehen, um rascher die Tendenz einer allfälligen Regelabweichung zu erkennen. Anderseits wird es für eine rasche Regelung im allgemeinen vorteilhafter sein, wenn mindestens die Lambda-Sonde Λ₁ zum Einsatz kommt. Im Falle der Verwendung beider Lambda-Sonden Λ₁ und Λ₂ ergibt sich der zusätzliche Vorteil, dass die das Messergebnis beeinflussende Alterung des Katalysators bestimmt werden kann, wie dies bei Auto-Katalysatoren bereits festgestellt wurde (Hansjörg Germann et al. "Differences in Pre- and Post-Converter Lambda-Sensor Characteristics" Electronic Engine Controls 1996, SP-1149, pp. 143-147).

Im dargestellten Ausführungsbeispiel mit drei Messstellen führen die elektrischen Leitungen 12, 13 und 18 zu einem Prozessor µ, der die Signale der Leitungen 12 und 18 (soweit sie bereits digital vorliegen) unmittelbar erhält oder an seinem Eingang jeweils einen Analog/Digital-Wandler aufweist. Bei der Leitung 13 wird im allgemeinen eine Vorbearbeitung des über sie zugeführten Messignals erforderlich sein, um sie von Rausch-Signalen u.dgl. abzutrennen. Dies kann in einer Filter-, Demodulator- bzw. (allgemein) Signalformerstufe 19 am Eingang des Prozessors µ erfolgen.

Im Prozessor µ ist zunächst einmal die zeitliche Reihenfolge der Messungen zu berücksichtigen. Die Abfolge wird um so kürzer (und damit für die Regelung weniger relevant) sein, als die Strömungsgeschwindigkeit der Gase zunimmt. Allenfalls werden die über die Leitungen 12, 13 und 18 eingehenden Signale auch gewichtet, bevor sie mit einem SOLL-Signal aus einem, vorzugsweise einstellbaren, Sollwertgeber 20 verglichen werden. Aus dem Ergebnis dieses Vergleiches resultiert ein Abweichungs- bzw. Regelsignal, das vom Ausgang des Prozessors µ über eine Leitung 21 an einen Regler 22 geführt wird. Der Regler 22 verändert vorteilhaft in entsprechender Weise ein Ventil V in der Leitung 9.

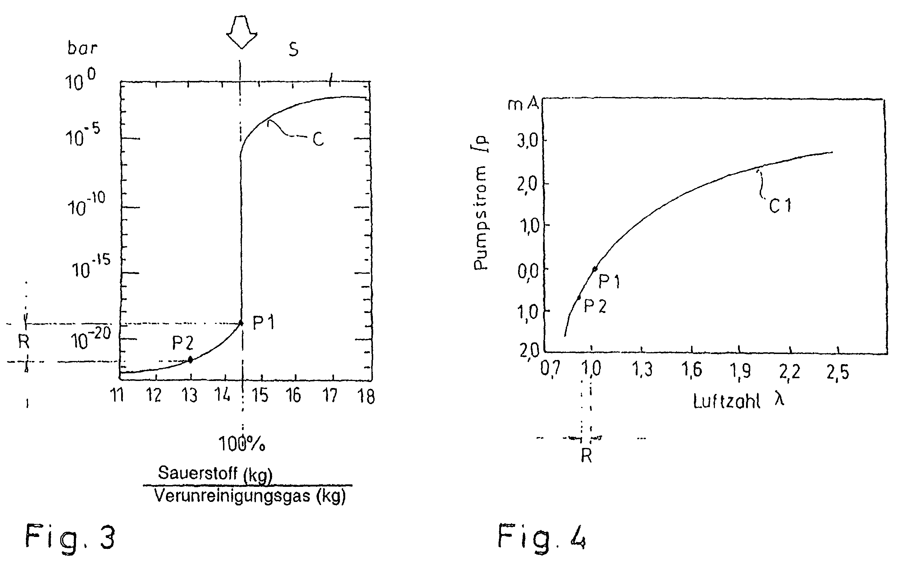

Oben ist bereits der Aufbau der Lambda-Sonde Λ an Hand der Fig. 2 beschrieben worden. Der Vorteil der Verwendung einer solchen Sonde liegt nicht zuletzt darin, dass sie eine sehr steile Charakteristik aufweist, wie sie aus Fig. 3 ersichtlich ist. Darin ist auf der Ordinate der Gleichgewichts-Sauerstoff-Partialdruck in bar und auf der Abszisse das Verhältnis von Sauerstoff zu verbrennendem Verunreinigungsgas aufgetragen. Alternativ kann die Ausgangsspannung der jeweiligen Lambda-Sonde aufgetragen werden (vgl. die Werte für Λ₂ in Tabelle 2), in welchem Falle sich die Kurve C umkehrt und von links oben nach rechts unten abfällt.

Die Lambda-Sonde Λ hat nun eine Charakteristik C, die gerade im Bereiche einer strich-punktierten Linie S einen besonders steilen Anstieg zeigt. Die Linie S entspricht einem stöchiometrischen Verhältnis von Sauerstoff zu verbrennendem Verunreinigungsgas. Von dieser Linie S nach links zu liegen die Werte eines "Fettgemisches", d.h. hier liegt der hypo-stöchiometrische Bereich mit geringen Sauerstoffmengen, in dem erfindungsgemäss gearbeitet wird. Wird eine stöchiometrische Sauerstoffmenge als 100% angenommen, so geht es nach links in den Bereich von 99% abwärts, wogegen nach rechts zu die hyper-stöchiometrischen Bereiche entsprechend einer Sauerstoffmenge >100% gelegen sind. Bei der erfindungsgemässen Regelung wird dementsprechend zweckmässig in einem Bereich der Kurve C geregelt, der zwischen zwei Punkten P1 und P2 liegt, deren Abstand einem Regelbereich R entspricht.

Eine weitere Charakteristik der Lambda-Sonde ist aus der Fig. 4 ersichtlich.

In einem nicht dargestellten aber wohlbekannten Sauerstoffsensor diffundieren die Komponenten des Abgases durch einen Diffusionskanal an die Elektroden einer Pumpund Nernstzelle. Eine Regelelektronik erfasst die Nernstspannung und versorgt die Pumpzelle mit einer variablen Pumpspannung. Dieser Regelkreis ist so ausgelegt, dass die Abgaszusammensetzung im Bereich der Elektroden auf einem konstanten Wert von Λ = 1 gehalten wird. Der Regler vergleicht die gemessene Nernstspannung mit einem Sollwert und stellt der Pumpzelle einen solchen Strom zur Verfügung, der bewirkt, dass sich die Sauerstoffkonzentration dem Sollwert immer mehr annähert.

An Hand der Fig. 4 ist dargestellt, wie der Pumpstrom von Λ abhängig und somit ein Mass für die Sauerstoffkonzentration im Abgas ist. Darin ist auf der Ordinate der Pumpstrom in Iₚ eingetragen, auf der Abszisse die Luftzahl des Abgases in Λ.

Im Magerbereich führt eine steigende Sauerstoffkonzentration zu einer linearen Zunahme des Pumpstroms. Eine ähnliche lineare Charakteristik, allerdings mit einer umgekehrten Stromrichtung, erhält man im fetten Bereich. Daraus resultiert, dass in dem gewünschten Bereich 0,98< Λ < 1,00 der Pumpstrom eine monoton steigende Funktion in Abhängigkeit von Lambda ist.
Der sich einstellende Pumpstrom Iₚ ist ein Mass für Lambda und somit auch ein Mass für die tatsächliche Sauerstoffkonzentration im Abgas. Bei der erfindungsgemässen Regelung wird dementsprechend zweckmässig in einem Bereich der Kurve C₁ geregelt, der zwischen zwei Punkten P1 und P2 in Fig. 4 liegt, deren Abstand einem Regelbereich R entspricht.

Im folgenden sollen Beispiele die erfindungsgemässe Arbeitsweise und ihre Resultate veranschaulichen.

### Beispiel 1:

Ein gewisser Unsicherheitsfaktor bei einer katalytischen Umwandlung ist der effektive Umsatzgrad des Katalysators selbst. Im allgemeinen werden nämlich nicht volle 100% der Verunreinigungen oxydiert. Angenommen, das über die Zuleitung 7 geführte Gasgemisch enthielte 500 ppm (Volumen) an Äthylenglykol und Stickstoff, so müssten rein stöchiometrisch 1250 ppm Sauerstoff zugegeben werden. Der Lambdawert betrüge dann genau 100% (Faktor 1,0). Beträgt aber der Umsatzgrad des Katalysators 8 nur 99%, so wäre die verbleibende Konzentration an bei der Verbrennung nicht beteiligtem Sauerstoff nach dem Katalysator immerhin noch 12,5 ppm und dementsprechend an unverbrannter Verunreinigung, nämlich Äthylenglykol, 5 ppm. Deshalb wurde eine erste Versuchsreihe durchgeführt (siehe Tabelle 1), um bei dem genannten Gasgemisch die Restkonzentrationen an Sauerstoff zu ermitteln:

**Tabelle 1:**

| Test Nr. | Faktor der stöchiom. O₂- Menge | Restsauerstoff bei Katalysator-Umsatz von | | |
|---|---|---|---|---|
| | | 100% | 99% | 95% |
| 1.1 | 1.01 | 12.5 | 25.0 | 75.0 |
| 1.2 | 1.00 | 0.0 | 12.5 | 62.5 |
| 1.3 | 0.99 | 0.0 | 0.0 | 50.0 |

In dieser Tabelle wurde der sog. Lambda-Faktor, d.h. der Faktor der stöchiometrischen Sauerstoffmenge, eingesetzt. Es wurde eine Versuchsanlage der in Fig. 1 angegebenen Art benutzt, wobei nur die Lambda-Sonde Λ2 eingesetzt wurde, um den Restsauerstoffgehalt in ppm festzustellen. Die Lambda-Sonde war ein Bosch-Erzeugnis, Type LSM 11. Dabei wurde ein Pt-Katalysator nach dem Stande der Technik verwendet, von dem man den Umsatz von 95% kannte. Die Werte für 100% und 99% wurden aufgrund der gefundenen Sauerstoffmengen errechnet.

Zunächst wurde in Test 1 ein Sauerstoffüberschuss von 101% der stöchiometrischen Menge verwendet, wie es dem US-Patent Nr. 5,547,652 entspricht. Dies ergab erwartungsgemäss einen relativ hohen Restsauerstoffgehalt von 75.0 ppm. Danach wurde im Versuch 2 der stöchiometrische Sauerstoffgehalt von 100% überprüft. Bei diesem Versuch Nr. 2 wurde immerhin noch ein Restsauerstoffgehalt von 62.5 ppm gemessen. Nur bei einem, in der Praxis nicht vorkommenden, Fall einer 100%-igen katalytischen Umsetzung des zu oxydierenden Gases Äthylenglykol ergäbe sich ein Restsauerstoffgehalt von 0 ppm.

Nun aber wurde die Versuchsreihe mit Versuchen im hypo-stöchiometrischen Bereich fortgesetzt. Die Tabelle zeigt lediglich die Werte für den Lambda-Faktor 0.99, bei dem sich noch ein Restsauerstoffgehalt vom 50.0 ppm ergibt. Bei weiteren, hier nicht dargestellten Tests bis zu einem Faktor von 0.90 verschwand aber auch jeglicher Restsauerstoff bzw. war dieser nicht mehr messbar. Dabei war es interessant festzustellen, dass erst bei 95% ein Restsauerstoffgehalt von 0 ppm (95% Katalysator-Umsatz) verblieb. Es wurden dann noch weitere Versuche bei noch niedrigeren Sauerstoffanteilen durchgeführt, wobei - unter Berücksichtigung von Toleranzen - offensichtlich 90% der stöchiometrischen Sauerstoffmenge die untere Grenze bildete, bei der noch irgendwelche Messergebnisse über Null erhalten werden konnten. Zwar zeigt die Tabelle, dass bei einem höheren Katalysator-Umsatz, z.B. von 99%, bereits bei einem Sauerstoffanteil von nur 99% der stöchiometrischen Menge ein Restsauerstoffgehalt von Null erhalten werden konnte, doch ist ein solcher Umsatz nicht unter allen Umständen möglich.

### Beispiel 2:

Als nächstes stellte sich die Frage, wie es denn wohl mit den Anteilen von Äthylenglykol und anderen Verunreinigungen am Ausgange des Katalysators 8 aussähe. Zu erwarten war an sich, dass mit abnehmendem Restsauerstoffgehalt der Anteil an unverbranntem Athylenglykol ansteigen werde. Es wurde daher ein Versuchsaufbau gewählt, bei dem die beiden Lambda-Sonden Λ₁ und Λ₂ installiert wurden. Die nachfolgende Tabelle 2 zeigt den Ablauf der Versuchsserie, wobei nicht nur der Sauerstoff (O₂) in ppm, sondern auch der Gehalt an Äthylenglykol (EG) in µg/l, an Acetaldehyd (AA) in µg/l sowohl mit der Lambda-Sonde Λ₁ als auch Λ₂ gemessen wurden und an Kohlenwasserstoffen (HC) nur an Λ₂. Die Werte für Restmengen an diesen Verunreinigungen sind die Werte in ppm v, d.h. Volumenteilen pro Million, angegeben. Der in der letzten Spalte (rechts) angegebene Wert ist jeweils das elektrische Ausgangssignal der Sonde Λ₂ in Millivolt, das ein Mass für den Lambda-Faktor ist.

**Tabelle 2**

| Test Nr. | Λ₁- Faktor | Werte an Λ₁ | | | Rest-Werte an Λ₂ | | | | mV |
|---|---|---|---|---|---|---|---|---|---|
| | | [EG] ppm v | [AA] ppm v | [O₂] ppm v | [EG] ppm v | [AA] ppm v | [O₂] ppm v | [HC]² ppm v | an Λ2 |
| 2.1 | 1.02 | - | - | 1420 | - | - | >1000 | 1.5 | 93 |
| 2.2 | 1.01 | 30.4 | 7.1 | 165 | <1.6 | <1.3 | 20 | 1.2 | 180 |
| 2.3 | 1.01 | 30.8 | 6.9 | 155 | <1.6 | <1.3 | 10 | 0.9 | 189 |
| 2.4 | 1.01 | 31.9 | 6.9 | 140 | <1.6 | <1.3 | 1.1 | 1.5 | 835 |
| 2.5 | 1.00 | 27.4 | 6.6 | 105 | <1.6 | <1.3 | 1.1 | 1.2 | 858 |
| 2.6 | 0.98 | 26.9 | 6.3 | 95 | <1.6 | <1.3 | 1.0 | 1.6 | 875 |
| 2.7 | 0.97 | 29.0 | 6.6 | 88 | <1.6 | <1.3 | 1.0 | 2.1 | 880 |
| 2.8 | 0.95 | 23.9 | 6.3 | 76 | <1.6 | <1.3 | 1.0 | 2.3 | 886 |

| | | | | | | | | | |
|---|---|---|---|---|---|---|---|---|---|
| ¹ Die Werte von EG und AA lagen unter dem messbaren Minimalwert ² Bei HC wurden die ppm v organischen Kohlenstoffes bestimmt | | | | | | | | | |

Die obige Tabelle 2 zeigt, dass bei hypo-stöchiometrischem Betrieb die Restwerte für EG und AA im wesentlichen gleichermassen verschwindend waren wie bei stöchiometrischem Betrieb (Versuch 2.5) oder einem Überschuss an Sauerstoff (Versuche 2.1 bis 2.4), so dass sich also die bisherige Vorstellung der Fachwelt als unrichtig erwies. Die Restwerte bei Kohlenwasserstoffen lagen zwar etwas, aber nur sehr geringfügig über den Restwert bei einem Betrieb nach dem Stande der Technik. Man kann also insgesamt sagen, dass die Vorteile des erfindungsgemässen Verfahrens den geringen Mehrausstoss an HC bei weitem überwiegen. Insbesondere ist auch ersichtlich, dass hier mit Hilfe der Lambda-Sonden Λ₁ und Λ₂ eine viel genauere Erfassung der interessierenden Werte erhalten werden kann, was auch eine wesentlich genauere Regelung ermöglicht und diese erst sinnvoll macht. Damit lässt sich aber auch die Gasreinigung wesentlich effizienter durchführen, als es nach dem Stande der Technik möglich war.

### Beispiel 3:

Ferner wurde ein Versuchsaufbau gewählt, bei dem die beiden Lambda-Sonden Λ₁ und Λ₂ in Fig. 1 installiert wurden. Die nachfolgende Tabelle 3 zeigt die Ergebnisse der Versuchsserie vor und nach dem Katalysator 8, wobei der Gehalt an Kohlenwasserstoffen mit dem von Propangas (C₃H₈) äquivalent ist (FID).
Da bei FID-Analysen auch Kohlenmonoxid (CO) mitgemessen wird, wurden zusätzlich Kohlenmonoxid (CO) und Kohlendioxyd (CO₂) separat vor und nach dem Katalysator gemessen.
Die Messungen des Austrittgases mit dem Gaschromatographen (GC) bestätigen, dass kein Äthylenglykol (EG) und kein Acetaldehyd (AA) vorhanden sind.

**Tabelle 3**

| Inlet | | | | | | Outlet | | | | | | |
|---|---|---|---|---|---|---|---|---|---|---|---|---|
| Trial # | Λ₁ - | Λ₁ µA | [FID]_{I} ppm v | [CO]_{I} ppm v | [CO₂]_{I} % v | Λ₂ - | Λ₂ µA | [FID]_{O} ppm v | [CO]_{O} ppm v | [CO₂]_{O} % v | [GC]_{O} ppm v | [O₂]_{O} ppm v |
| 1 | 0.999 | -1 | 62 | 72 | 6.5 | 0.999 | -3 | 8.6 | 19 | 8 | 0 | 0...1 |
| 2 | 0.999 | -1 | 63 | 50 | 7 | 0.999 | -2 | 6.8 | 30 | 8.5 | 0 | 0...1 |
| 3 | 0.999 | -1 | 63 | 65 | 4.5 | 0.999 | -3 | 4.8 | 13 | 6 | 0 | 0...1 |
| 4 | 1.000 | 1 | 57 | 18 | 2 | 0.999 | 0 | 0.3 | 0 | 6 | 0 | 0...1 |
| 5 | 1.001 | 2 | 62 | - | - | 1.000 | 0 | 0.2 | - | - | 0 | 12...15 |

Die obige Tabelle zeigt, dass im hypo-stöchiometrischen Bereich (Versuche 1-3) die Restverunreinigungen an FID nur geringfügig über denen bei einem stöchiometrischen Betrieb ( Versuch 4) liegen. Femer ist auch ersichtlich, dass im hyper-stöchiometrischen Betrieb (Versuch 5) die Werte von CO unter dem messbaren Minimalwert lagen.

Obwohl Sauerstoff in dem hypostöchiometrischen Bereich dem Abgas zugefügt wird (Versuche 1, 2, 3), werden die ungewünschten Verunreinigungen vollständig verbrannt oder verbleiben in so geringen Mengen, die nicht mehr messbar sind.

## Patentansprüche

1. Verfahren zur Reinigung eines einen Reaktor (1) für die Festphasen-Kondensation, vorzugsweise für aromatische Polyester, wie Polyesterharze und Polyamiden, wie aromatische PA, verlassenden Gasstroms mit von organischen Verbindungen gebildeten Verunreinigungen, bei dem ein mindestens Sauerstoff enthaltendes Gas dem verunreinigten Gasstrom zugeführt wird und der gemeinsame Gasstrom bei erhöhten Temperaturen, insbesondere von 280°C bis 380°C, über einen Katalysator (8) geführt wird, wobei die verwendete Sauerstoffmenge in Bezug auf die organischen Verunreinigungen hypo-stöchiometrisch ist **dadurch gekennzeichnet, dass** das Verhältnis von Sauerstoff zu den Verunreinigungen mittels mindestens einer Lambda-Sonde (Λ₁ bzw. Λ₂) überwacht wird, die an jedem der mit der Katalysatoreinheit verbundenen Leitungswege angeschlossen ist.

2. Verfahren nach Anspruch 1, **dadurch gekennzeichnet, dass** das verunreinigte Gas ein Inertgas ist, das vorzugsweise nach der Reinigung mindestens zum Teil in den Reaktor (1) rückgeführt wird.

3. Verfahren nach Anspruch 1 oder 2, **dadurch gekennzeichnet, dass** die hypo-stöchiometrische Sauerstoffmenge 98% bis < 100%, vorzugsweise wenigstens 99%, der stöchiometrischen beträgt.

4. Verfahren nach einem der vorhergehenden Ansprüche, **dadurch gekennzeichnet, dass** die Überwachung mittels wenigstens einer Lambda-Sonde (Λ₁) vor dem Katalysator (8) erfolgt und/oder dass die Überwachung mittels wenigstens einer Lambda-Sonde am Katalysator (8) erfolgt.

5. Verfahren nach Anspruch 4, **dadurch gekennzeichnet, dass** die Überwachung mittels wenigstens je einer Lambda-Sonde (Λ₁ bzw. Λ₂) vor und nach dem Katalysator (8) erfolgt.

6. Verfahren nach Anspruch 5, **dadurch gekennzeichnet, dass** die von den Lambda-Sonden (Λ₁, Λ₂) abgegebenen Überwachungssignale vor der weiteren Verarbeitung gewichtet werden.

7. Verfahren nach Anspruch 5 oder 6, **dadurch gekennzeichnet, dass** mindestens das bzw. die Überwachungssignale der Lambda-Sonde(n) (Λ₂) nach dem Katalysator (8) vor der weiteren Verarbeitung differenziert wird bzw. werden.

8. Verfahren nach einem der vorhergehenden Ansprüche, **dadurch gekennzeichnet, dass** der Katalysator (8) selbst als lambdasondenartige Messzelle herangezogen wird.

9. Verfahren nach Anspruch 6, **dadurch gekennzeichnet, dass** das von der lambdasondenartigen Messzelle gewonnene Überwachungssignal gefiltert und entkoppelt bzw. demoduliert wird.

10. Verfahren nach einem der vorhergehenden Ansprüche, **dadurch gekennzeichnet, dass** die Überwachung einen IST-Wert erbringt, der mit einem SOLLWert verglichen und die daraus festgestellte Abweichung zur Regelung der Zufuhr von Sauerstoff verwendet wird.

11. Anordnung zur Durchführung des Verfahrens nach einem der Ansprüche 5 bis 10, mit einem Reaktor (1) für die Festphasen-Kondensation, einer ersten Zuleitung (7) für das verunreinigte, aus dem Reaktor (1) abströmende Gas zu einer Katalysatoreinheit (8, 8'), an welche erste Zuleitung (7) eine Luft-Einspeisung (9) für ein mindestens Sauerstoff enthaltendes Gas zur gemeinsamen Zuleitung über eine Sammelleitung (11) und an die Katalysatoreinheit (8, 8') mindestens eine Ausgangsleitung (24) angeschlossen ist, **dadurch gekennzeichnet, dass** an jedem der mit der Katalysatoreinheit verbundenen Leitungswege (11, 24) jeweils mindestens eine Lambda-Sonde (Λ₁, Λ₂) angeschlossen ist.

12. Anordnung nach Anspruch 11, **dadurch gekennzeichnet, dass** eine (Λ₁) der Lambda-Sonden (Λ₁, Λ₂) an eine der zur Katalysatoreinheit (8, 8') führenden Leitungen (11), insbesondere nach der Einmündung der Luft-Einspeisung (9) in die erste Zuleitung (7), angeschlossen ist.

13. Anordnung nach Anspruch 11 oder 12, **dadurch gekennzeichnet, dass** der Katalysatorkörper (8') Rhodium, vorzugsweise eine Rhodium-Legierung enthält.

14. Anordnung nach Anspruch 12, **dadurch gekennzeichnet, dass** in der Leitung (18) zwischen der nach dem Katalysator (8) angeordneten Lambda-Sonde (Λ₂) und dem Prozessor (µ) ein Differenzierglied angeordnet ist.

## Claims

1. A process of purifying a gas stream leaving a reactor (1) for solid-phase condensation, preferably for aromatic polyesters such as polyester resins and polyamides such as aromatic PA and containing impurities formed by aromatic compounds, whereby a gas containing at least oxygen is added to the contaminated gas stream and the combined gas stream is passed over a catalyst (8) at elevated temperatures in particular 280 °C to 380 °C, whereby the amount of oxygen used is in the hypostoichiometic range with respect to the organic impurities, **characterized in that** the ratio of oxygen to the impurities is monitored by means of at least lambda probe (Λ₁ and/or Λ₂) which is connected to each of the line paths connected to the catalyst.

2. The process according to Claim 1, **characterized in that** the contaminated gas is an inert gas which is preferably recycled at least partially back to reactor (1) after purification.

3. The process according to Claim 1 or 2, **characterized in that** the hypostoichiometric amount of oxygen is 98 % to <100 %, preferably at least 99 % of the stoichiometric amount.

4. The process according to one of the preceding Claims, **characterized in that** the monitoring is performed by means of at least one lambda probe (Λ₁) upstream from the catalyst (8) and/or the monitoring is performed by means of at least one lambda probe on the catalyst (8).

5. The process according to Claim 4, **characterized in that** the monitoring is performed by means of at least one lambda probe (Λ₁ and/or Λ₂) upstream and downstream from the catalyst (8).

6. The process according to Claim 5, **characterized in that** the monitoring signals delivered by the lambda probes (Λ₁, Λ₂) are weighted before further processing.

7. The process according to Claim 5 or 6, **characterized in that** at least the monitoring signal(s) of the lambda probe(s) (Λ₂) is/are differentiated before further processing downstream from the catalyst (8).

8. The process according to one of the preceding Claims, **characterized in that** the catalyst (8) itself is used as the lambda probe-like measurement cell.

9. The process according to Claim 6, **characterized in that** the monitoring signal obtained from the lambda probe-like measurement cell is filtered and uncoupled and/or demodulated.

10. The process according to one of the preceding Claims, **characterized in that** the monitoring yields an ACTUAL value which is compared with a SETPOINT value and the deviation determined from that is used to regulate the supply of oxygen.

11. An arrangement for carrying out the process according to one of Claims 5 through 10, with a reactor (1) for solid-phase condensation, a first feeder line (7) for the contaminated gas flowing out of the reactor (1) to a catalyst unit (8, 8') to which first feeder line (7) is connected, an air inlet (9) for a gas containing at least oxygen for being supplied jointly through a collective line (11) and at last one outlet line (24) is connected to the catalyst unit (8, 8'), **characterized in that** at least one lambda probe (Λ₁, Λ₂) is connected to each of the line paths (11, 24) connected to the catalyst unit.

12. The arrangement according to Claim 11, **characterized in that** one lambda probe (Λ₁) of the lambda probes (Λ₁, Λ₂) is connected to one of the lines (11) leading to the catalyst unit (8, 8'), in particular downstream from the opening of the air feed (9) into the first feeder line (7).

13. The arrangement according to Claim 11 or 12, **characterized in that** the catalyst body (8') contains rhodium, preferably a rhodium alloy.

14. The arrangement according to Claim 12, **characterized in that** a differentiating element is arranged in the line (18) between the processor (µ) and the lambda probe (Λ₂) arranged downstream from the catalyst (8).

## Revendications

1. Procédé pour nettoyer un flux de gaz quittant un réacteur (1) pour la condensation à l'état solide, de préférence pour des polyesters aromatiques tels que des résines de polyester et des polyamides tels que des polyamides aromatiques, avec des impuretés formées de liaisons organiques, avec lequel un gaz contenant au moins de l'oxygène est amené au flux de gaz souillé et le flux de gaz commun est guidé au moyen d'un catalyseur (8) avec des températures élevées, en particulier de 280 °C à 380 °C, au moyen d'un catalyseur (8), la quantité d'oxygène utilisée étant hypostoechiométrique par rapport aux impuretés organiques, **caractérisé en ce que** le rapport entre l'oxygène et les impuretés est contrôlée au moyen d'au moins une sonde lambda (Λ₁ ou Λ₂), qui est raccordée à chacune des conduites reliées au catalyseur.

2. Procédé selon la revendication 1, **caractérisé en ce que** le gaz souillé est un gaz inerte qui est recyclé de préférence après le nettoyage au moins partiellement dans le réacteur (1).

3. Procédé selon la revendication 1 ou 2, **caractérisé en ce que** la quantité d'oxygène hypostoechiométrique est de 98 % à moins de 100 %, de préférence d'au moins 99 %, qui est stoechiométrique.

4. Procédé selon l'une quelconque des revendications précédentes, **caractérisé en ce que** le contrôle s'effectue au moyen d'au moins une sonde lambda (Λ₁) avant le catalyseur (8) et/ou **en ce que** le contrôle s'effectue au moyen d'au moins une sonde lambda sur le catalyseur (8).

5. Procédé selon la revendication 4, **caractérisé en ce que** le contrôle s'effectue au moyen d'au moins une sonde lambda (Λ₁ ou Λ₂) avant et après le catalyseur (8).

6. Procédé selon la revendication 5, **caractérisé en ce que** les signaux de contrôle émis par les sondes lambda (Λ₁, Λ₂) sont pondérés avant le traitement ultérieur.

7. Procédé selon la revendication 5 ou 6, **caractérisé en ce qu'**au moins le ou les signaux de contrôle de la (des) sonde(s) lambda (Λ₂) est (sont) différencié(s) après le catalyseur (8) avant le traitement ultérieur.

8. Procédé selon l'une quelconque des revendications précédentes, **caractérisé en ce que** le catalyseur (8) est utilisé même comme cellule de mesure du type sonde lambda.

9. Procédé selon la revendication 6, **caractérisé en ce que** le signal de contrôle obtenu par la cellule de mesure du type sonde lambda est filtré et découplé ou démodulé.

10. Procédé selon l'une quelconque des revendications précédentes, **caractérisé en ce que** le contrôle fournit une valeur REELLE qui est comparée avec une valeur THEORIQUE et l'écart constaté alors est utilisé pour le réglage de l'apport d'oxygène.

11. Dispositif pour la réalisation du procédé selon l'une quelconque des revendications 5 à 10, avec un réacteur (1) pour la condensation à phase solide, une première conduite d'arrivée (7) pour le gaz souillé et sortant du réacteur (1) allant vers un catalyseur (8, 8'), une entrée d'air (9) pour un gaz contenant au moins de l'oxygène allant vers la conduite d'arrivée commune étant raccordée par une conduite commune (11) à la première conduite d'arrivée (7) et au moins une conduite de sortie (24) étant raccordée au catalyseur (8,8'), **caractérisé en ce qu'**au moins une sonde lambda (Λ₁, Λ₂) est raccordée à chacune des conduites (11, 24) reliées au catalyseur.

12. Dispositif selon la revendication 11, **caractérisé en ce qu'**une (Λ₁) des sondes lambda (Λ₁, Λ₂) est raccordée à l'une des conduites (11) allant au catalyseur (8, 8'), en particulier après l'arrivée de l'alimentation d'air (9) dans la première conduite d'arrivée (7).

13. Dispositif selon la revendication 11 ou 12, **caractérisé en ce que** le corps catalyseur (8') contient du rhodium, de préférence un alliage de rhodium.

14. Dispositif selon la revendication 12, **caractérisé en ce qu'**un élément différenciateur est disposée dans la conduite (18) entre la sonde lambda (Λ₂) disposée après le catalyseur (8) et le processeur (µ).
